# EUROPÄISCHE PATENTSCHRIFT

(11) **EP 2 655 202 B1**
(45) Veröffentlichungstag und Bekanntmachung des Hinweises auf die Patenterteilung: **08.02.2017**
(21) Anmeldenummer: 11808855.8
(22) Anmeldetag: 21.12.2011
(51) Int. Cl.: B65D 5/74, B29C 65/08, B65D 47/12

(54) **AUSGIESSER, VERFAHREN ZUM HERSTELLEN EINES AUSGIESSERS UND BEHÄLTER UMFASSEND EINEN DERARTIGEN AUSGIESSER**
SPOUT, METHOD FOR PRODUCING A SPOUT, AND CONTAINER COMPRISING SUCH A SPOUT
VERSEUR, PROCÉDÉ POUR PRODUIRE UN VERSEUR ET CONTENANT POURVU D'UN TEL VERSEUR

(30) Priorität: 21.12.2010 EP 10196361
(43) Veröffentlichungstag der Anmeldung: 30.10.2013
(73) Patentinhaber: Capartis AG, 8200 Schaffhausen (CH)
(72) Erfinder: WOHLGENANNT, Herbert, 8200 Schaffhausen (CH)
(74) Vertreter: Dr. Graf & Partner AG
(86) Internationale Anmeldenummer: PCT/EP2011/073689
(87) Internationale Veröffentlichungsnummer: WO 2012/085153

(56) Entgegenhaltungen:
- WO-A1-2007/132021
- DE-B3-102005 013 902
- GB-A- 2 408 040
- JP-A- H10 245 062

## Beschreibung

Die Erfindung betrifft einen Ausgiesser gemäss dem Oberbegriff von Anspruch 1. Die Erfindung betrifft weiter ein Verfahren zum Herstellen eines Ausgiessers gemäss dem Oberbegriff von Anspruch 8. Die Erfindung betrifft weiter eine Verbundpackung gemäss Anspruch 12.

### Stand der Technik

Das Dokument US 6,279,779 offenbart einen wieder verschliessbaren Behälterverschluss, der zum Verschliessen von Lebensmittelbehältern geeignet ist, insbesondere von Lebensmittelbehältern bestehend aus einem laminierten Schichtwerkstoff, auch als Verbundpackung bezeichnet. Um Lebensmittel wie zum Beispiel UHT-Milch (Ultra-high-temperature processe milk) langfristig in einer solchen Verbundpackung zu lagern ist eine aseptische Verpackung erforderlich. Eine solche aseptische Verpackung umfasst eine sauerstoffundurchlässige Schicht. Eine derartige Sperrschicht wird vorzugsweise aus Aluminium gebildet, wobei der Schichtwerkstoff beziehungsweise der Folienverbund üblicherweise derart ausgebildet ist, dass ein Aluminium-Film oder eine Aluminium-Folie aussen und innen mit zumindest einer Kunststoffschicht beschichtet ist, sodass die Kunststoffschicht die innere Oberfläche der Verbundpackung ausbildet, mit welcher das sich in der Verbundpackung befindliche Lebensmittel in Kontakt tritt. Um eine derartige Verbundpackung bequem öffnen zu können ist diese an der Öffnungsstelle mit einer Sollbruchstelle versehen, wobei ein Behälterverschluss im Bereich der Sollbruchstelle an der Aussenoberfläche der Verbundpackung angeordnet ist, und wobei der Behälterverschluss eine Schneide aufweist, welche sich beim Drehen des Behälterverschlusses nach unten bewegt und dabei die Sollbruchstelle durchtrennt, sodass im Schichtwerkstoff eine Öffnung entsteht, welche über den Behälterverschluss einen Zugang zum Innern der Verbundpackung ausbildet.

Ein derartiger Behälterverschluss weist den Nachteil auf, dass die Verbundpackung relativ aufwendig herzustellen ist, da Sollbruchstellen vorzusehen sind. Zudem darf die Sperrschicht nicht verletzt werden. Zudem ist der Verschluss genau positioniert an die Aussenseite der Verbundpackung aufzukleben, was einen zusätzlichen Arbeitsschritt sowie Klebstoff erfordert.

Das Dokument GB 2 408 040 A offenbart einen weiteren Behälterverschluss. Dieser Behälterverschluss weist den Nachteil auf, dass beim erstmaligen Öffnen in einem ersten Schritt ein Schraubdeckel entfernt werden muss und anschliessend in einem zweiten Schritt ein Ziehring erfasst und daran gezogen werden muss, um ein entfernbares Teil aus dem Behälterverschluss herauszureissen. Das Öffnen dieses Behälterverschlusses ist daher sehr umständlich und bedarf einiger Kraft und Fingerfertigkeit,

Das Dokument DE 10 2005 013 902 B3 offenbart einen Behälterverschluss mit einer durchtrennbaren Folie, wobei die Folie zum einfacheren Durchtrennen eine Schwächungslinie wie eine Perforierung aufweist. Ein Nachteil dieses Behälterverschlusses ist, dass dieser zur aseptischen Verpackung von Lebensmitteln nicht geeignet ist.

Das Dokument JP-A-10 245062 offenbart einen Behälterverschluss mit einer durchtrennbaren Folie. Ein Nachteil dieses Behälterverschlusses ist, dass dieser zur aseptischen Verpackung von Lebensmitteln nicht geeignet ist.

### Darstellung der Erfindung

Aufgabe der Erfindung ist es einen vorteilhafteren Ausgiesser vorzuschlagen, der wirtschaftlich vorteilhafter ist, und der insbesondere auch für aseptische Verbundpackungen geeignet ist.

Diese Aufgabe wird gelöst mit einem Ausgiesser aufweisend die Merkmale von Anspruch 1. Die Unteransprüche 2 bis 7 betreffen weitere vorteilhafte Ausgestaltungen. Die Aufgabe wird weiter gelöst mit einem Verfahren zum Herstellen des erfindungsgemässen Ausgiessers aufweisend die Merkmale von Anspruch 8. Die Unteransprüche 9 und 11 offenbaren weitere vorteilhafte Verfahrensschritte. Die Aufgabe wird weiter gelöst mit einer Verbundpackung aufweisend die Merkmale von Anspruch 12.

Die Aufgabe wird insbesondere gelöst mit einem Ausgiesser umfassend ein Ausgiessteil mit einer Eintrittsöffnung sowie einer Ausgiessöffnung, sowie umfassend ein mit dem Ausgiessteil verbundenes Flanschteil, wobei das Flanschteil zwei Seiten aufweist, eine Befestigungsseite sowie eine Rückseite, wobei die Befestigungsseite zum Ausgiessteil hin ausgerichtet ist und zur Befestigung an einer Verbundpackung vorgesehen ist, wobei eine Folie an der Rückseite des Flanschteils angeordnet ist und mit der Rückseite verschweisst ist, sodass das Ausgiessteil zur Rückseite hin nur durch die Folie versiegelt ist, wobei die Folie einen Endabschnitt aufweist, und wobei das Flanschteil eine in dessen Umfangsrichtung verlaufende Verschweissung aufweist, wobei die Verschweissung derart ausgestaltet ist, dass der Endabschnitt beidseitig im Flanschteil eingeschweisst ist, wobei die Folie sauerstoffundurchlässig ist, und wobei sich die Distanz zwischen dem Endabschnitt und der Befestigungsseite in Richtung zur Peripherie des Flanschteils hin verringert. Unter dem Begriff Folie wird ein Folienverbund verstanden, wobei die sauerstoffundurchlässige Folie vorzugsweise einen Schichtwerkstoff mit Aluminium umfasst.

Die Aufgabe wird weiter insbesondere gelöst mit einem Verfahren zum Herstellen eines Ausgiessers umfassend ein Ausgiessteil mit einer Eintrittsöffnung sowie einer Ausgiessöffnung, sowie umfassend ein mit dem Ausgiessteil verbundenes Flanschteil, wobei das Flanschteil zwei Seiten aufweist, eine Befestigungsseite sowie eine Rückseite, wobei die Befestigungsseite zum Ausgiessteil hin ausgerichtet ist, wobei das Flanschteil mit einem an der Rückseite in Umfangsrichtung umlaufenden, über die Rückseite vorstehenden Nasenteil und mit einer zum Nasenteil hin abnehmenden Dicke erzeugt wird, wobei eine Folie, welche auch die Eintrittsöffnung bedeckt, in einen vom Nasenteil umschlossenen Bereich der Rückseite angeordnet wird, wobei die Folie zum Nasenteil hin einen Endabschnitt aufweist, und wobei das Nasenteil derart zu einem Versiegelungsteil umgeformt wird, dass das Versiegelungsteil den Endabschnitt in Umfangsrichtung umschliesst und der Endabschnitt der Folie beidseitig im Flanschteil eingeschweisst ist, sodass das Ausgiessteil zur Rückseite hin nur durch die Folie versiegelt ist, und wobei sich die Distanz zwischen Folie und Befestigungsseite bei eingeschweisster Folie zumindest im Bereich des Versiegelungsteil verringert. Als Kunststoff zur Herstellung des Ausgiessteils wird vorzugsweise ein Thermoplast verwendet. Das Verformen des Nasenteils erfolgt vorzugsweise mit Ultraschallschweissen, insbesondere mit einem torsionalen Ultraschallweissen oder mit einem longitudinalen Ultraschallschweissen, um das vorstehende Nasenteil zu einem Versiegelungsteil zu verformen, welches beidseitig am Endabschnitt der Folie anliegt und zudem an der Stirnseite des Endabschnittes der Folie anliegt, um den Folie durch Ultraschallschweissen gasdicht mit dem Ausgiesser zu verbinden. Dabei ist insbesondere auch die Stirnseite der Folie, an welcher sich Aluminium befinden kann, gasdicht im Flanschteil eingeschweisst. Vorteilhafterweise weist die Sonotrode, mit welcher das Versiegelungsteil ausbildet wird, einen gekrümmten Verlauf auf, vorteilhafterweise derart, dass ein wulstförmiges Versiegelungsteil ausgebildet wird.

Die Aufgabe wird weiter insbesondere gelöst mit einer Verbundpackung umfassend den erfindungsgemässen Ausgiesser, wobei das Flanschteil derart ausgestaltet ist, dass die mit der Befestigungsseite verschweisste Verbundpackung und die an der Rückseite angeordnete Folie sich in bezüglich des Flanschteils radialer Richtung gegenseitig um eine Distanz von zumindest 1 mm, und vorzugsweise um eine Distanz von bis zu 5 mm überlappen.

Eine vorteilhafte Ausgestaltung betrifft einen Behälterverschluss umfassend den erfindungsgemässen Ausgiesser, sowie umfassend einen Schraubdeckel mit einem Innengewinde und einer Drehachse, sowie umfassend ein Schneidteil welches innerhalb des Ausgiessteils angeordnet ist, wobei das Schneidteil ein Aussengewinde und der Ausgiesser ein Innengewinde aufweist, welche ineinander greifen und derart ausgestaltet sind, dass sich das Schneidteil beim Öffnen des Schraubdeckels in Richtung der Drehachse zur Folie hin bewegt, wobei der Schraubdeckel ein Eingreifteil umfasst, und wobei das Schneidteil und der Schraubdeckel derart gegenseitig angepasst ausgestaltet sind, dass das Eingreifteil ein Drehmoment auf das Schneidteil überträgt.

Der erfindungsgemässe Ausgiesser weist den Vorteil auf, dass der Endabschnitt sowie die Stirnseite der Folie gasdicht im Flanschteil eingeschweisst sind.
Der erfindungsgemässe Ausgiesser weist den Vorteil auf, dass dieser die Eintrittsöffnung beziehungsweise Ausgiessöffnung eines

Ausgiessers mit Hilfe einer Folie sauerstoffundurchlässige versiegelt beziehungsweise zusiegelt. Dabei ist die Folie fest mit dem Ausgiesser verschweisst und bildet somit ein Teil des Ausgiessers. Dies wiederum ergibt die Möglichkeit eine Verbundpackung mit einer Ausstanzung wie ein Loch zu versehen, wobei der Ausgiesser von der Innenseite her in das Loch einführbar ist, und wobei das Flanschteil mit der Innenseite der Verbundpackung verschweissbar ist, sodass der Ausgiesser fest mit der Verbundpackung verbunden ist. Die Verbundpackung umfasst in einer bevorzugten Ausgestaltung eine sauerstoffundurchlässige Folie, wobei auch der erfindungsgemässe Ausgiesser eine sauerstoffundurchlässige Folie aufweist, sodass in einer bevorzugten Ausgestaltung die gesamte Wandung der Verbundpackung inklusive das Loch mittels des Ausgiessers mit einer sauerstoffundurchlässigen Folie versehen ist.
Somit ist es nicht mehr wie bisher erforderlich bei einer sauerstoffundurchlässigen Verbundpackung eine Öffnungsstelle mit einer Sollbruchstelle zu versehen, und einen Behälterverschluss im Bereich der Sollbruchstelle an der Aussenoberfläche der Verbundpackung anzukleben. Die Öffnungsstelle solcher Verbundpackungen umfasst üblicherweise auch Karton- oder Papieranteile, weshalb eine erhöhte Kraft erforderlich ist um die Öffnungsstelle zu öffnen. Der erfindungsgemässe Ausgiesser weist den Vorteil auf, dass die verwendete Folie, welche die Ausgiessöffnung versiegelt, relativ dünn ausgestaltet sein kann, und dass diese Folie insbesondere keine Karton- oder Papieranteile umfassen muss, sodass diese Folie mit relativ geringer Kraft geöffnet werden kann.

Es ist an sich bekannt Verbundpackungen mit einem Loch zu versehen, und einen Ausgiesser von der Innenseite her in das Loch einzuführen und den Ausgiesser über dessen Flanschteil mit der Innenseite der Verbundpackung zu verschweissen. Eine solche Verbundpackung mit Ausgiesser weist den Nachteil auf, dass diese sauerstoffdurchlässig und somit für gewisse Lebensmittel nicht geeignet ist. In einer vorteilhaften Ausgestaltung weist der erfindungsgemässe Ausgiesser zumindest betreffend dem Aussendurchmesser des Ausgiessteils dieselben geometrische Dimensionen auf wie ein bekannter Ausgiesser, was den Vorteil ergibt, dass der erfindungsgemässe Ausgiesser auf derselben Verpackungsanlage verwendet werden kann wie bisherige Ausgiesser. Dies wiederum ergibt den Vorteil, dass auf einer Verpackungsanlage, mit welcher bisher nicht aseptisch verpackt werden konnte, dank dem erfindungsgemässen Ausgiesser und unter Verwendung einer entsprechenden Verbundpackung aufweisend eine sauerstoffundurchlässige Schicht eine aseptische Verpackung möglich ist.

### Kurze Beschreibung der Zeichnungen

Die zur Erläuterung der Ausführungsbeispiele verwendeten Zeichnungen zeigen:
Fig. 1 einen Querschnitt durch zwei mögliche Ausführungsformen von Ausgiessern;
Fig. 2 einen Querschnitt durch den erfindungsgemässen Ausgiesser entlang der Schnittlinie A-A;
Fig. 3 eine Detailansicht des in Figur 2 dargestellten Ausgiessers;
Fig. 4 einen Querschnitt durch ein Zwischenprodukt des erfindungsgemässen Ausgiesser;
Fig. Seine Detailansicht des in Figur 4 dargestellten Zwischenproduktes;
Fig. 6 eine Seitenansicht des erfindungsgemässen Ausgiesser;
Fig. 7 eine perspektivische Ansicht des erfindungsgemässen Ausgiesser;
Fig. 8 eine Draufsicht des erfindungsgemässen Ausgiesser;
Fig. 9 eine Untenansicht des erfindungsgemässen Ausgiesser;
Fig. 10 eine perspektivische Ansicht eines Verschlusses umfassend den erfindungsgemässen Ausgiesser;
Fig. 11 eine perspektivische Ansicht eines Schneideteils des Verschlusses gemäss Figur 10;
Fig. 12 einen Querschnitt durch den Verschluss gemäss Figur 10;
Fig. 13 einen Querschnitt durch den Verschluss gemäss Figur 10 entlang der Schnittlinie B-B;
Fig. 14 eine perspektivische Innenansicht eines Verschlusses;
Fig. 15 eine gegenüber Figur 3 modifizierte Anordnung der Verschweissstelle;
Fig. 16 eine Ansicht des Schraubdeckels von unten;
Fig. 17 eine Detailansicht eines weiteren Ausführungsbeispiels eines Zwischenproduktes eines Ausgiessers;
Fig. 18 eine Detailansicht eines weiteren Ausgiessers;
Fig. 19 eine Detailansicht eines Ausschnittes einer Sonotrode.

Grundsätzlich sind in den Zeichnungen gleiche Teile mit gleichen Bezugszeichen versehen.

### Wege zur Ausführung der Erfindung

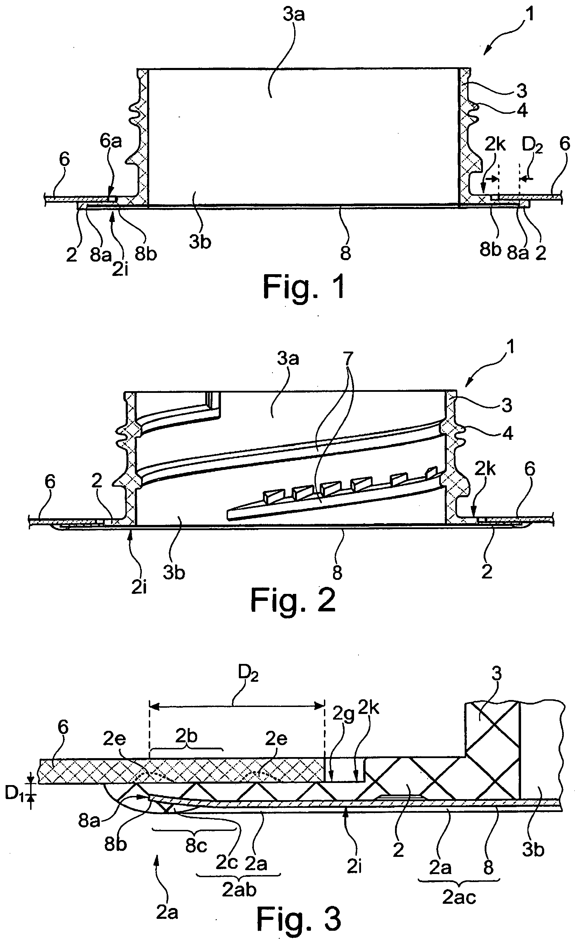

Figur 1 zeigt einen Ausgiesser 1 umfassend ein Ausgiessteil 3 mit einem Aussengewinde 4 und mit einer Eintrittsöffnung 3b sowie einer Ausgiessöffnung 3a sowie umfassend ein mit dem Ausgiessteil 3 verbundenes Flanschteil 2, wobei das Flanschteil 2 zwei Seiten aufweist, eine Befestigungsseite 2k sowie eine Rückseite 2i, wobei die Befestigungsseite 2k zum Ausgiessteil 3 hin ausgerichtet ist und zur Befestigung an eine Verbundpackung 6 angeschweißt werden kann. Ein derartiger Ausgiesser 1, ohne die mit 8 und 8b bezeichneten Elemente, ist bekannt, und wird in Kombination mit Verbundmaterial 6 verwendet, das mit einem vorgestanzten Loch 6a versehen ist, durch welches der Ausgiesser 1 eingeführt und anschliessend mit der Innenseite des Verbundmaterials 6 verklebt wird. Ein derartiger Ausgiesser 1 umfasst ein beidseitig offenes, rohrförmiges Ausgiessteil 3.
Figur 1 zeigt zudem ein erstes Ausführungsbeispiel eines erfindungsgemässen Ausgiessers 1, welcher zusätzlich zu dem vorhin beschriebenen Ausgiesser eine Folie 8 mit Endabschnitten 8b aufweist, wobei die Endabschnitte 8b an einer Stirnseite 8a enden, wobei sowohl der links wie auch der rechts dargestellte Endabschnitte 8b oben und unten, das heisst beidseitig und im Bereich der Rückseite 2i mit dem Flanschteil 2 verschweisst ist. Die Folie 8 mit Endabschnitten 8b und Stirnseite 8a ist in Umfangsrichtung über den gesamten Umfang mit dem Flanschteil 2 verschweisst, sodass die Ausgiessöffnung 3a beziehungsweise die Eintrittsöffnung 3b zur Rückseite 2i hin durch die Folie 8 versiegelt, vorzugsweise gasdicht versiegelt ist. Die gasdichte Versiegelung erfolgt vorzugsweise mittels Ultraschweissen. In einer bevorzugten Ausgestaltung sind die Endabschnitte 8b und die Verbundpackung 6 derart gegenseitig angeordnet, dass sich diese entlang einer Distanz D2 gegenseitig überlappen, insbesondere um einen Diffusion von Sauerstoff von Aussen in das Innere der Verbundpackung 6 zu verhindern oder zu vermindern.

Aus Figur 1 ist insbesondere auch ersichtlich, dass der erfindungsgemässe Ausgiesser in einer möglichen Ausgestaltung im wesentlichen dieselbe geometrische Dimension aufweisen kann wie ein bisher bekannter Ausgiesser, was den Vorteil ergibt, dass der erfindungsgemässe Ausgiesser in Kombination mit bereits bekannten Verbundpackungen verwendet werden kann, und dass der erfindungsgemässe Ausgiesser auf bereits bestehenden Verpackungsanlagen verwendet werden kann. Besonders vorteilhaft ist dabei, dass mit Verpackungsanlagen, auf denen bisher keine aseptischen Behälter hergestellt werden konnten, dank dem erfindungsgemässen Ausgiesser nun auch aseptische Behälter herstellbar sind, sofern der für die Verbundpackung verwendete Schichtwerkstoff eine sauerstoffundurchlässige Schicht aufweist.

Figur 2 zeigt ein weiteres Ausführungsbeispiel eines Ausgiessers 1 der im Innenraum 3a zudem ein Innengewinde 7 aufweist. Auf der Rückseite 2i des Flanschteil 2 ist eine sauerstoffundurchlässige Folie 8 angeordnet, welche zumindest teilweise mit der Oberfläche oder innerhalb der Rückseite 2i verschweisst ist, wobei die Verschweissung über den gesamte Umfangs des Flanschteils 2 verläuft, sodass die Ausgiessöffnung 3a beziehungsweise die Eintrittsöffnung 3a zur Rückseite 2i hin durch die die gesamte Ausgiessöffnung 3a beziehungsweise die Eintrittöffnung 3a bedeckende Folie 8 versiegelt ist.

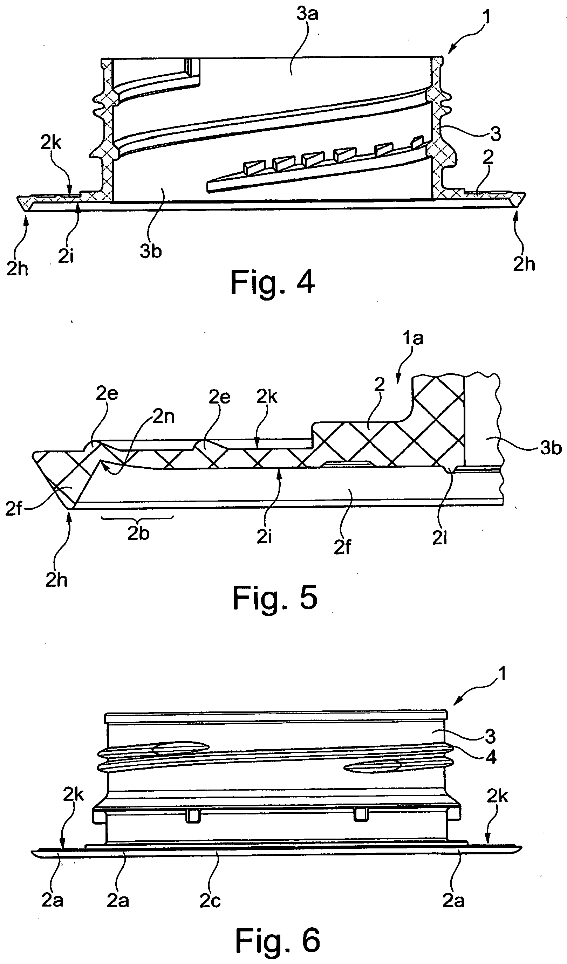

Figur 3 zeigt eine Detailansicht der linken Seite des in Figur 2 dargestellten Ausgiessers 1. Das Flanschteil 2 weist auf der Befestigungsseite 2k eine Vertiefung 2g auf, welche zur Aufnahme der Verbundpackung 6 bestimmt ist. Der Endabschnitt 8b der Folie 8 ist derart im Flanschteil 2 verlaufend angeordnet, zum Beispiel in Form eines gekrümmt verlaufenden Abschnittes 8c, dass sich die Distanz zwischen Endabschnitt 8b und Befestigungsseite 2k in Richtung zur Peripherie des Flanschteils 2 hin verringert. Um dies zu ermöglichen weist das Flanschteil 2 in einer vorteilhaften Ausgestaltung zur Peripherie hin eine sich verringernde Dicke auf, sodass sich der gegenseitige Abstand zwischen der Befestigungsseite 2k und der Rückseite 2i reduziert. Besonders vorteilhaft ist der Endabschnitt 8b bezüglich der Befestigungsseite 2k geneigt oder gekrümmt verlaufend ausgestaltet, wobei die Oberfläche der Vertiefung 2g vorteilhafterweise geradlinig verläuft. Die Noppen 2e stellen so genannte Energierichtungsgeber dar, welche vor dem Verschweissen des Flanschteils 2 mit der Verbundpackung 6 über die Oberfläche der Vertiefung 2g vorstehen, wobei diese Noppen 2e während des Verschweissens, z.B. während dem Ultraschallschweissen von Flanschteil 2 und Verbundpackung 6 schmelzen, sodass die Noppen 2e in der dargestellten Anordnung an sich nicht mehr sichtbar sind, weshalb die Noppen 2e nur strichliert dargestellt sind. Der Endabschnitt 8b der Folie 8 endet an einer Stirnseite 8a, wobei die Distanz D 1 zwischen der Befestigungsseite 2k beziehungsweise der Vertiefung 2g und der Stirnseite 8a im Bereich bis zu 0,5 mm liegt, und vorzugsweise im Bereich zwischen bis und mit 0,1 und 0,3 mm liegt. Die Distanz D1 könnte jedoch auch im Bereich von bis zu 1 mm liegen. Eine geringe Distanz D 1 weist den Vorteil auf, dass an dieser Stelle keine oder eine nur sehr geringe Menge Sauerstoff von Aussen in den Innenraum der Verbundpackung 6 eindringen kann. Vorteilhafterweise ist das Flanschteil 2 derart ausgestaltet, dass die mit der Befestigungsseite 2k beziehungsweise der Vertiefung 2g verschweisste Verbundpackung 6 und die an der Rückseite 2i angeordnete Folie 8 sich in bezüglich des Flanschteils 2 radialer Richtung gegenseitig um eine Distanz D2 von zumindest 1 mm, vorzugsweise um eine Distanz D2 von bis zu 5 mm oder bis zu 10 mm überlappen. Eine grössere Distanz D2 weist den Vorteil auf, dass es für Sauerstoff schwieriger ist von Aussen in den Innenraum der Verbundpackung 6 einzudringen. In einer besonders vorteilhaften Anordnung wird somit eine kleine Distanz D 1 und eine grosse Distanz D2 gewählt, um das Eindringen von Sauerstoff zu behindern oder zu verhindern.
Das Flanschteil 2 weist eine Verschweissung 2a auf, bei welcher nach Abschluss des Verschweissungsvorganges ein Versiegelungsteil 2c ausgebildet wird, sodass der Endabschnitt 8b der Folie 8 im Bereich des Versiegelungsteils 2c beidseitig im Flanschteil 2 angeordnet ist und die Stirnseite 8a des Endabschnittes 8b sowie der Endabschnitt 8b vom Versiegelungsteil 2c umschlossen ist. Die Folie 8 ist vorzugsweise als Schichtwerkstoff ausgebildet und weist als Sperrschicht vorzugsweise eine Aluminiumschicht auf. Die Aluminiumschicht ist vorzugsweise beidseitig mit zumindest einer Kunststoffschicht bedeckt, wobei die Aluminiumschicht an der Stirnseite 8a an die Oberfläche der Folie 8 treten kann. Die Stirnseite 8a sowie der Endabschnitt 8b ist gasdicht innerhalb des Versiegelungsteils 2c angeordnet. In einer besonders vorteilhaften Ausgestaltung weist das Versiegelungsteil 2c einen gekrümmten Verlauf auf, vorteilhafterweise einen wulstförmigen Verlauf. Die gasdichte Verschweissung zum Versiegelungsteil 2c erfolgt mittels Ultraschall. Die Verschweissung 2a erstreckt sich, wie teilweise ersichtlich, über den ganzen Umfang des Flanschteils 2, sodass eine dichte, insbesondere eine gasdichte Verbindung zwischen Flanschteil 2 und Folie 8 ausgebildet ist. Vorteilhafterweise sind zwischen dem Flanschteil 2 und der Folie 8 zumindest eine weitere Verschweissung vorgesehen, wie diese durch eine erste Verschweissung 2ac sowie eine zweite Verschweissung 2ab, welche als Bereicht dargestellt sind, angedeutet ist. Die erste oder zweite Verschweissung 2ac, 2ab erstreckt sich ebenfalls über die gesamte Umfangsrichtung des Flanschteils 2. Die erste Verschweissung 2ac ist im Bereich der Eintrittsöffnung 3b angeordnet und erstreckt sich entlang des gesamten Umfangs der Rückseite 2i. Zum sicheren Verschweissen der Folie 8 mit dem Flanschteil 2 ist, wie in Figur 5 dargestellt, ein Energierichtungsgeber 21 beziehungsweise eine Noppe 21 vorgesehen, um die Folie 8 im Bereich der Eintrittsöffnung 3b mit der Rückseite 2i zu verbinden. Diese erste Verschweissung 2ac ist insbesondere auch deshalb von Wichtigkeit, weil die Folie 8 in einer bevorzugten Ausgestaltung mit einer Klinge durchtrennt wird, die von der Seite des Ausgiessteils 3 auf die Folie 8 einwirkt. Die erste Verschweissung 2ac hält somit die Folie 8 bezüglich dem Rand der Eintrittsöffnung 3b in einer definierten Lage, was ein besonders präzises durchtrennen der Folie 8 mit einer Klinge ermöglicht, da die Folie 8 nicht oder nur geringfügig zurückweichen kann.

Figur 4 zeigt einen Schnitt durch ein Zwischenprodukt 1a des Ausgiessers 1 vor dem Anschweissen der Folie 8. Das Zwischenprodukt 1a wird nachfolgend auch als Halbfertigprodukt 1a bezeichnet. Figur 5 zeigt die linke Seite des in Figur 4 dargestellten Zwischenproduktes 1a des Ausgiessers 1 im Detail. Der Flansch 2 weist ein entlang des gesamten Umfangs verlaufendes, bezüglich der Rückseite 2i vorstehendes Nasenteil 2f auf, welches eine Verschweissungsstelle 2h in noch nicht verschweisstem Zustand ausbildet. Die Rückseite 2i weist zudem einen gekrümmt verlaufenden Abschnitt 2b auf. An der Befestigungsseite 2k sind kreisförmig umlaufende Noppen 2e angeordnet, welche als Energierichtungsgeber 2e ausgestaltet sind, und unter anderem zum Verschweissen mit der Verpackung 6 dienen. In einer besonders vorteilhaften Ausgestaltung ist die dünnste Stelle 2n, welche im dargestellten Ausführungsbeispiel als Knickpunkt ausgestaltet ist, gegenüber einem Energierichtungsgeber 2e angeordnet, was den Vorteil ergibt, dass die Spritzgussform, mit welcher das in Figur 1 dargestellte Zwischenprodukt 1a vorzugsweise hergestellt wird, im Bereich der dünnsten Stelle 2n einen breiteren Kanal ausbildet, sodass die Zufuhr von Spritzgussmaterial in das vorstehende Nasenteil 2f gewährleistet ist. Dies ermöglicht ein Zwischenprodukt 1a herzustellen, welches eine besonders geringe Distanz zwischen der Befestigungsseite 2k und der dünnsten Stelle 2n aufweist.

Der erfindungsgemässe Ausgiesser 1 wird in einem vorteilhaften Verfahren derart hergestellt, dass als Zwischenprodukt 1a ein Ausgiesser 1 hergestellt wird, der an der Rückseite 2i, wie in den Figuren 4 und 5 dargestellt, ein in Umfangsrichtung umlaufendes, über die Rückseite 2i vorstehendes Nasenteil 2f aufweist, wobei in einem nachfolgenden Verfahrensschritt eine Folie 8, welche auch die Ausgiessöffnung 3a beziehungsweise die Einlassöffnung 3b bedeckt, in den vom Nasenteil 2f umschlossenen Bereich der Rückseite 2i angeordnet wird. Die Folie 8 weist zum Nasenteil 2f hin den Endabschnitt 8b auf. In einem nachfolgenden Verfahrensschritt wird das Nasenteil 2f mittels Ultraschallschweissen , wie in Figur 3 dargestellt, derart zu einem Versiegelungsteil 2c umgeformt, dass das Versiegelungsteil 2c den Endabschnitt 8b in Umfangsrichtung umschliesst und der Endabschnitt 8b zusammen mit der Stirnseite 8a der Folie 8 beidseitig im Flanschteil 2 eingeschweisst ist.

In einem besonders vorteilhaften Verfahren wird das Flanschteil 2 mit einer zum Nasenteil 2f hin abnehmenden Dicke erzeugt, damit sich die Distanz D 1 zwischen Folie 8 und Befestigungsseite 2k bei eingeschweisster Folie 8 zumindest im Bereich des Versiegelungsteil 2c verringert. Besonders vorteilhaft wird die Rückseite 2i mit einer in Richtung zum Nasenteil 2f hin gekrümmt verlaufenden Oberfläche ausgebildet.

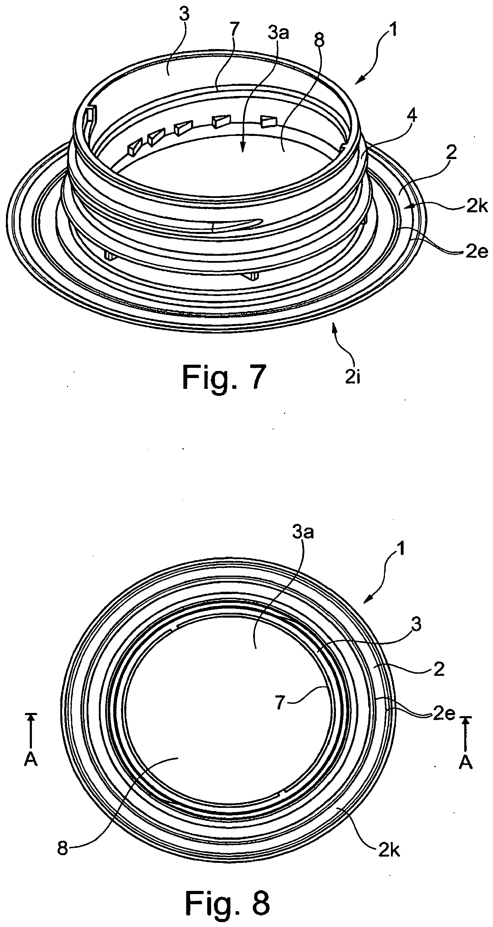

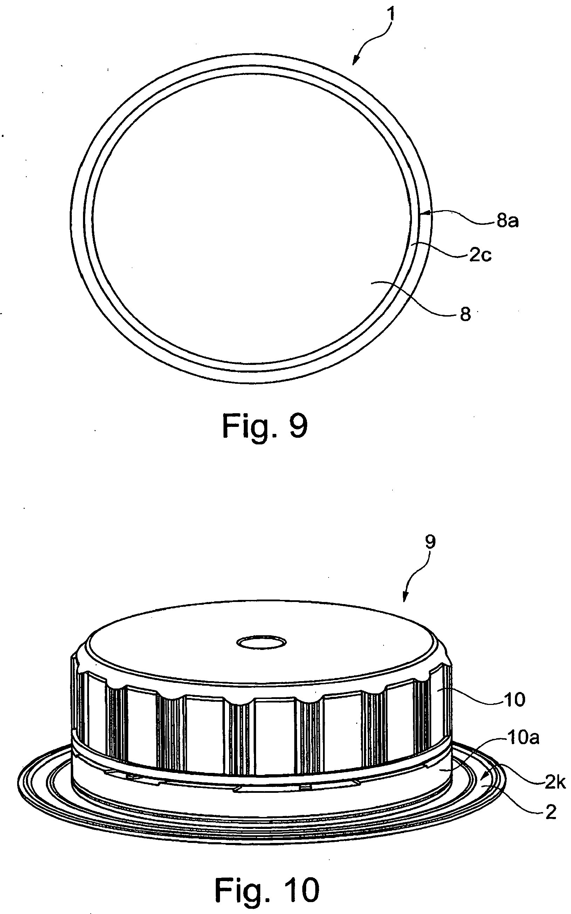

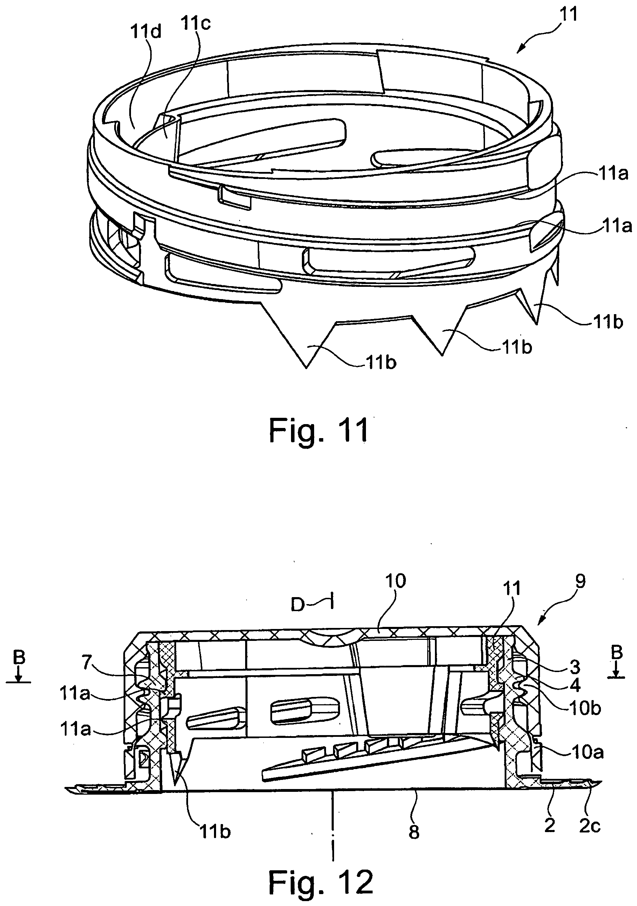

Figur 6 zeigt den fertig hergestellten Ausgiesser 1 umfassend die angeschweisste Folie 8 in einer Seitenansicht, wobei insbesondere auch die in Umfangsrichtung verlaufende wustförmige Verschweissung 2a beziehungsweise das Versiegelungsteil 2c dargestellt ist. Figur 7 zeigt den fertig hergestellten Ausgiesser 1 in einer perspektivischen Ansicht, Figur 8 in einer Ansicht von oben und Figur 9 in einer Ansicht von unten. Die Figuren 2 und 3 zeigen den fertig hergestellten Ausgiesser 1 entlang der Schnittlinie A-A gemäss Figur 8.
Der erfindungsgemässe Ausgiesser 1 kann in einer Vielzahl von Ausführungsform zu einem Behälterverschluss 9 kombiniert werden. Die Figuren 10 bis 14 und 16 zeigen beispielhaft eine mögliche Ausführungsform eines Behälterverschlusses 9 und dessen Teilkomponenten. Der Behälterverschluss 9 und dessen Teilkomponenten bestehen vorzugsweise aus einem Kunststoff, wobei die Folie 9 als Sperrschicht ein Metall wie Aluminium umfasst. Figur 10 zeigt eine perspektivische Ansicht eines geschlossenen Behälterverschlusses 9, wobei ein Schraubdeckel 10 mit Garantieband 10a und ein Flansch 2 sichtbar dargestellt ist. Vorteilhafterweise wird der Behälterverschluss 9 in dieser Anordnung über die Befestigungsseite 2k mit einer Verpackung beziehungsweise einer Behälterwand verschweisst. Figur 11 zeigt in einer perspektivischen Ansicht ein Ausführungsbeispiel eines Schneidelementes 11, welches ein Aussengewinde 11a, eine Mehrzahl von Schneiden 11b, ein Seitenwandteil 11c und eine Längsführung 11d umfasst. Figur 12 zeigt einen Querschnitt durch den in Figur 9 dargestellten Behälterverschluss 9.

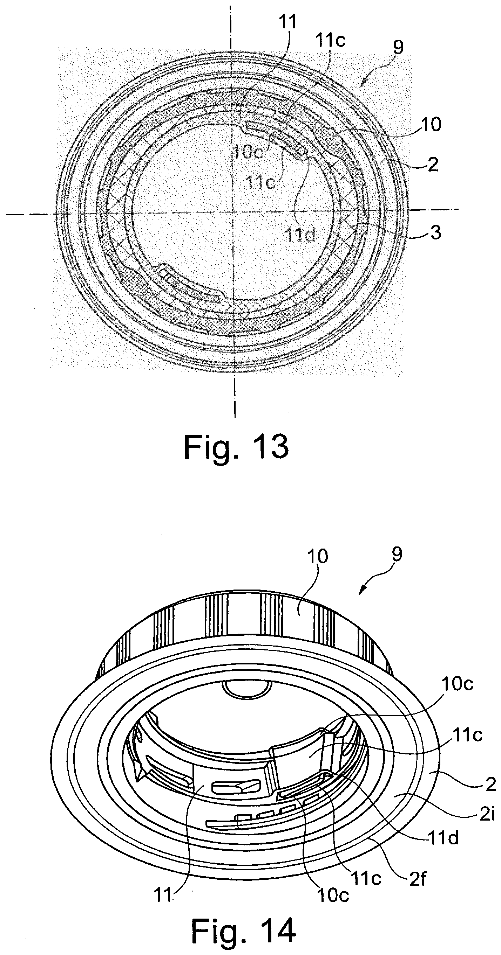

Der Behälterverschluss 9 umfassend einen Ausgiesser 1 bestehend aus einem hohlzylinderförmigen Ausgiessteil 3, einem Flansch 2 sowie einer mit dem Flansch 2 verschweissten Folie 8. Der Behälterverschluss 9 umfasst weiter einen Schraubdeckel 10 mit einem Innengewinde 10b und einer Drehachse D, und umfasst weiter ein Schneidteil 11 welches innerhalb des Ausgiessteils 3 angeordnet ist, wobei das Schneidteil 11 ein Aussengewinde 11a und der Ausgiesser 1 ein Innengewinde 7 aufweist, welche ineinander greifen und derart ausgestaltet sind, dass sich das Schneidteil 11 beim erstmaligen Öffnen des Schraubdeckels 10 unter Rotation in Richtung der Drehachse D zur Folie 8 hin bewegt, sodass die Schneiden 11b in die Folie 8 eindringen, diese durchtrennen und dadurch zumindest teilweise eröffnet. Der Schraubdeckel 10 umfasst, wie aus den Figuren 13, 14 und 16 ersichtlich, ein Eingreifteil 10c, wobei das Schneidteil 11 und der Schraubdeckel 10 derart gegenseitig angepasst ausgestaltet sind, dass das Eingreifteil 10c ein Drehmoment auf das Schneidteil 11 überträgt. In den Figuren 10 bis 14 und 16 bezeichnen dieselben Bezugszeichen die gleichen Gegenstände.

In einer vorteilhaften Ausführungsform ist der Behälterverschluss 9 derart ausgestaltet, dass das Eingreifteil 10c in Verlaufsrichtung der Drehachse D verläuft, und dass das Schneidteil 11 eine Lasche 11c zur Aufnahme des Eingreifteils 10c umfasst, wobei die Lasche 11c derart ausgestaltet ist, dass das Eingreifteil 10c bezüglich der Lasche 11c in Verlaufsrichtung der Drehachse D verschiebbar gelagert ist und dabei unter Ausbildung einer Längsführung 11d eine formschlüssige Verbindung ausbildet.

Der dargestellte Behälterverschluss 9 weist den Vorteil auf, dass die Eingreifteile 10c sehr gut im Schneidteil 11 geführt sind, was wiederum den Vorteil ergibt, dass die Eingreifteile 10c sehr dünn und leicht ausgestaltet sein können, und nur eine relativ geringe Stabilität aufweisen müssen, sodass bei der Herstellung des Schraubdeckels 10 und insbesondere der Eingreifteile 10c Material eingespart werden kann. Zudem bildet der Behälterverschluss 9 im montierten Zustand eine unverlierbare Fixierung aus.

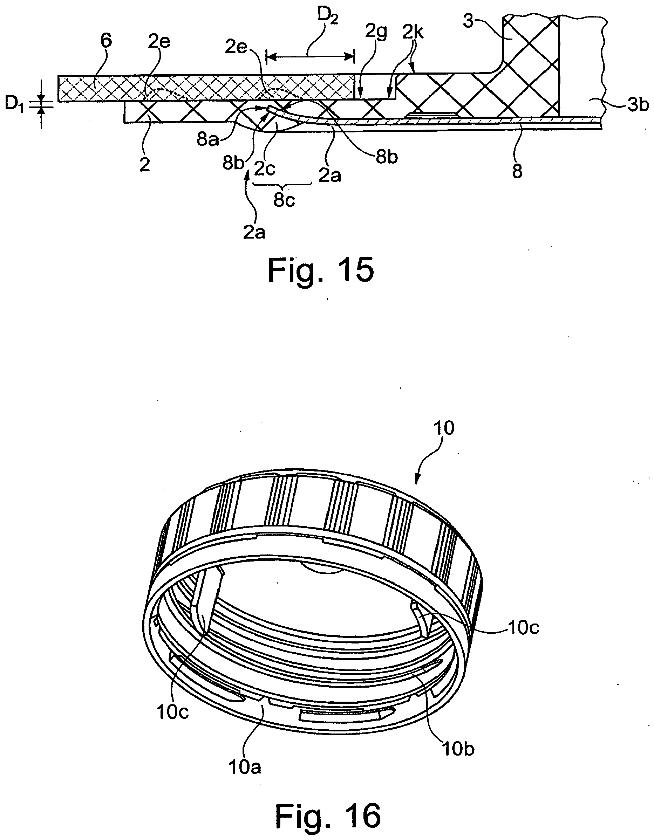

Figur 15 zeigt in einer Detailansicht, ähnlich wie Figur 3, ein weiteres Ausführungsbeispiel einer Verschweissung 2a der Folie 8 am Flansch 2. Im Unterschied zu der in Figur 3 dargestellten Ausführungsform ist die Verschweissung 2a sowie der Endabschnitt 8b der Folie 8 weiter nach rechts zum hohlzylinderförmigen Ausgiessteil 3 hin verschoben angeordnet, sodass sich eine kürzere Distanz D2 ergibt. Der Flansch 2 kann nach der Verschweissung 2a enden, oder, wie in Figur 15 dargestellt, sich noch weiter zur Peripherie hin erstrecken.

Der erfindungsgemässe Ausgiesser 1 könnte auch mit einer Vielzahl von anders ausgestalteten Schraubdeckeln 10 und Schneidelementen 11 kombiniert werden, welche die Eigenschaft haben die Ausgiessöffnung 3a von Aussen zu verschliessen und die Folie 8 zu durchtrennen.

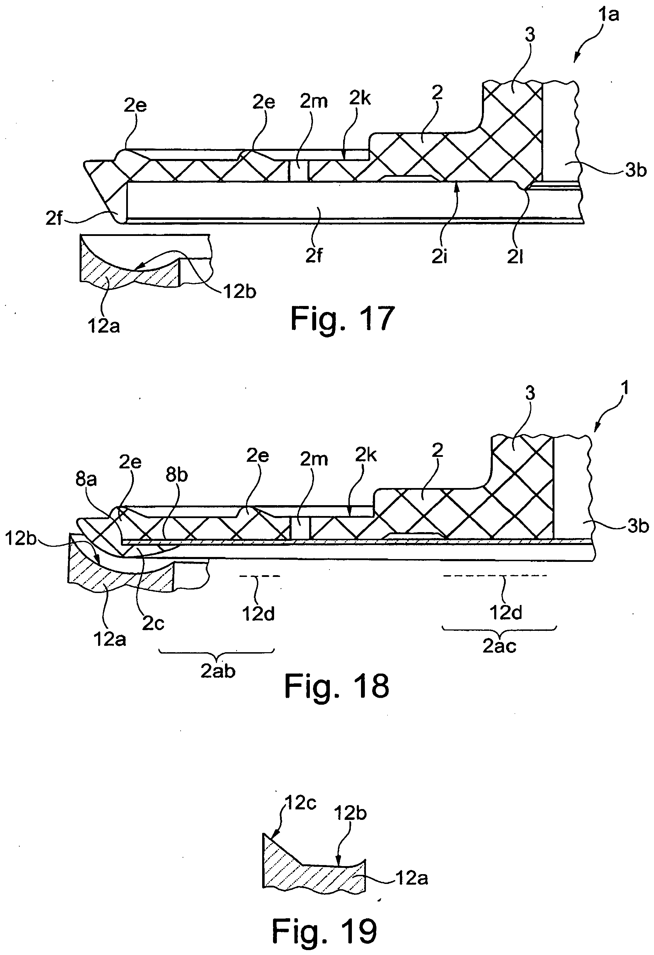

Figur 17 zeigt, ähnlich wie in Figur 5, einen Schnitt durch ein weiteres Ausführungsbeispiel eines Zwischenprodukts 1a eines Ausgiessers 1 vor dem Anschweissen der Folie 8. Im Unterschied zur Ausführungsform gemäss Figur 5 verläuft die Rückseite 2i geradlinig. Zudem umfasst das Flanschteil 2 ein Entlüftungsloch 2m, welches eine Fluid leitende Verbindung zwischen der Befestigungsseite 2k und der Rückseite 2i ausbildet. Figur 17 zeigt zudem einen Ausschnitt einer Sonotrode 12a, welche Teil einer Ultraschallschweissvorrichtung bildet. Die Sonotrode 12a weist eine Formfläche 12b auf. Auch das in Figur 5 dargestellte Zwischenprodukt 1a könnte ein Entlüftungsloch 2m aufweisen.

Figur 18 zeigt das in Figur 17 dargestellte Zwischenpunkt 1a nach dem Verschweissen mit der Folie 8, sodass der Ausgiesser 1 umfassend die Folie 8 ausgebildet ist. Dazu wird in der in Figur 17 dargestellten Anordnung die Folie 8 auf die Rückseite 2i gelegt, und danach die Sonotrode 12a zur Rückseite 2i hin gefahren, um durch Ultraschweissen das vorstehende Nasenteil 2f zum wulstförmigen Versiegelungsteil 2c zuerst anzuschmelzen und danach zu verformen. Das Ultraschallschweissen erfolgt vorzugsweise mit einem torsionalen Schweissen. Es könnte jedoch auch ein longitudinales Schweissen verwendet werden. In Figur 18 ist die Sonotrode 12a bereits wieder teilweise zurückgefahren, sodass das Versiegelungsteil 2c gut sichtbar ist. Wie dargestellt bestimmt die Formfläche 12b der Sonotrode 12a vorteilhafterweise den erzielten Verlauf des Versieglungsteils 2c. Vorzugsweise ist die Formfläche 12b kurvenförmig ausgestaltet, um ein wulstförmiges Versiegelungsteil 2c zu erzielen. Die Formfläche 12b könnte jedoch auch anders verlaufend ausgestaltet sein, beispielsweise wie in Figur 19 dargestellt. Die Formfläche 12b umfasst immer eine bezüglich dem Verlauf der Befestigungsseite 2k geneigte beziehungsweise quer, schräg oder radial verlaufende Teilformfläche 12c, um Material des vorstehenden Nasenteils 2f in Richtung zur Eintrittsöffnung 3b hin wegzudrängen, damit das Nasenteil 2f, wie in Figur 18 dargestellt, zum Versiegelungsteil 2c umgeformt wird, sodass das Versiegelungsteil 2c den Endabschnitt 8b auch auf der Aussenseite bedeckt.

Die Sonotrode 12 ist vorteilhafterweise grösser als dargestellt ausgestaltet, und umfasst vorteilhafterweise weitere, nur andeutungsweise dargestellte Formflächen 12d, um zusätzlich die erste Verschweissung 2ac auszubilden, und den Energierichtungsgeber 21 umzuformen und/oder die zweite Verschweissung 2ab auszubilden. Das Loch 2m dient dabei zur Entgasung des zwischen der ersten und zweiten Verschweissung 2ac,2ab befindlichen Raumes, damit zwischen der Rückseite 2i und der Folie 8 keine Luft eingeschlossen wird beziehungsweise damit keine Luftblase ausgebildet wird.

In einem vorteilhaften Verfahren wird während des Ultraschallschweisses Material des Nasenteils 2f in Richtung zur Eintrittsöffnung 3b hin gedrängt, damit der Endabschnitt 8b auf der der Rückseite 2i abgewandten Seiten mit Material bedeckt wird und dabei das Versiegelungsteil 2c ausgebildet wird, wobei das Versiegelungsteil 2c vorzugsweise wulstförmig ausgebildet wird.

In einem vorteilhaften Verfahren weist eine Sonotrode 12a eine Formfläche 12b aufweist, mit einer bezüglich dem Verlauf der Befestigungsseite 2k geneigten beziehungsweise quer, schräg oder radial verlaufende Teilformfläche 12c, wobei diese Teilformfläche 12c auf das vorstehende Nasenteil 2f wirkt, um Material des Nasenteils 2f in Richtung zur Eintrittsöffnung 3b hin wegzudrängen. Eine derartige Teilformfläche 12c ist in Figur 19 dargestellt. Auch der in den Figuren 17 und 18 dargestellte Verlauf der Formfläche 12b weist auf der linken Seite eine nicht dargestellte, aber sichtbare, rund verlaufende Teilformfläche 12c auf, welche Material des vorstehenden Nasenteil 2f in Richtung zur Eintrittsöffnung 3b hin wegzudrängen.

Der erfindungsgemässe Ausgiesser 1 beziehungsweise der Behälterverschluss 9 wird vorteilhafterweise in mehreren nacheinander folgenden Verfahrensschritte hergestellt, indem in einem ersten Verfahrensschritt das zum Beispiel in Figur 4 dargestellte Halbfertigprodukt 1a hergestellt wird, und indem in einem nachfolgenden Verfahrensschritt, wie zum Beispiel in Anspruch 13 beansprucht, der Ausgiesser 1 hergestellt wird, indem die Folie 8 mit dem Halbfertigprodukt 1a verschweisst wird, und indem, wie zum Beispiel in Figur 10 dargestellt, in einem nachfolgenden Verfahrensschritt der Ausgiesser 1 mit einem Schraubdeckel 10 versehen wird. Der Behälterverschluss 9 kann danach mit einen Lebensmittelbehälter verbunden werden, beispielsweise in eine mit einem laminierten Schichtwerkstoff hergestellte Verbundpackung geschweisst werden, um derart eine aseptische Verpackung herzustellen.

## Patentansprüche

1. Ausgiesser (1) umfassend ein Ausgiessteil (3) mit einer Eintrittsöffnung (3b) sowie einer Ausgiessöffnung (3a) sowie umfassend ein mit dem Ausgiessteil (3) verbundenes Flanschteil (2), wobei das Flanschteil (2) zwei Seiten aufweist, eine Befestigungsseite (2k) sowie eine Rückseite (2i), wobei die Befestigungsseite (2k) zum Ausgiessteil (3) hin ausgerichtet ist und zur Befestigung an einer Verbundpackung (6) vorgesehen ist, wobei eine Folie (8) an der Rückseite (2i) des Flanschteils (2) angeordnet ist und mit der Rückseite (2i) verschweisst ist, sodass das Ausgiessteil (3) zur Rückseite (2i) hin nur durch die Folie (8) versiegelt ist, wobei die Folie (8) einen Endabschnitt (8b) aufweist, und wobei das Flanschteil (2) eine in dessen Umfangsrichtung verlaufende Verschweissung (2a) aufweist, **dadurch gekennzeichnet, dass** die Verschweissung (2a) derart ausgestaltet ist, dass der Endabschnitt (8b) beidseitig im Flanschteil (2) eingeschweisst ist, dass die Folie (8) sauerstoffundurchlässig ist, und dass sich die Distanz zwischen dem Endabschnitt (8b) und der Befestigungsseite (2k) in Richtung zur Peripherie des Flanschteils 2 hin verringert.

2. Ausgiesser nach Anspruch 1, **dadurch gekennzeichnet, dass** der Endabschnitt (8b) eine Stirnseite (8a) aufweist, und dass der Endabschnitt (8b) sowie die Stirnseite (8a) der Folie (8) gasdicht im Flanschteil (2) eingeschweisst sind.

3. Ausgiesser nach einem der Ansprüche 1 oder 2, **dadurch gekennzeichnet, dass** die in Umfangsrichtung verlaufende Verschweissung (2a), in welcher der Endabschnitt (8b) beidseitig eingeschweisst ist, als ein wulstförmiges Versiegelungsteil (2c) ausgestaltet ist.

4. Ausgiesser nach einem der vorhergehenden Ansprüche, **dadurch gekennzeichnet, dass** der Endabschnitt (8b) und die Befestigungsseite (2k) übereinander liegend angeordnet ist.

5. Ausgiesser nach einem der vorhergehenden Ansprüche, **dadurch gekennzeichnet, dass** der Endabschnitt (8b) bezüglich der Befestigungsseite (2k) geneigt oder gekrümmt verläuft.

6. Ausgiesser nach einem der vorhergehenden Ansprüche, **dadurch gekennzeichnet, dass** der Endabschnitt (8b) an der Stirnseite (8a) endet, und dass die Distanz (D1) zwischen der Befestigungsseite (2k) und der Stirnseite (8a) im Bereich bis zu 0,5 mm liegt.

7. Ausgiesser nach Anspruch 6, dadurch gekennzeichent, dass die Distanz (D1) im Bereich zwischen 0,1 und 0,3 mm liegt.

8. Verfahren zum Herstellen eines Ausgiessers (1) umfassend ein Ausgiessteil (3) mit einer Eintrittsöffnung (3b) sowie einer Ausgiessöffnung (3a) sowie umfassend ein mit dem Ausgiessteil (3) verbundenes Flanschteil (2), wobei das Flanschteil (2) zwei Seiten aufweist, eine Befestigungsseite (2k) sowie eine Rückseite (2i), wobei die Befestigungsseite (2k) zum Ausgiessteil (3) hin ausgerichtet ist, **dadurch gekennzeichnet, dass** das Flanschteil (2) mit einem an der Rückseite (2i) in Umfangsrichtung umlaufenden, über die Rückseite (2i) vorstehenden Nasenteil (2f) und mit einerzum Nasenteil (2f) hin abnehmenden Dicke erzeugt wird, dass eine Folie (8), welche auch die Eintrittsöffnung (3b) bedeckt, in einen vom Nasenteil (2f) umschlossenen Bereich der Rückseite (2i) angeordnet wird, dass die Folie (8) zum Nasenteil (2f) hin einen Endabschnitt (8b) aufweist, und dass das Nasenteil (2f) derart zu einem Versiegelungsteil (2c) umgeformt wird, dass das Versiegelungsteil (2c) den Endabschnitt (8b) in Umfangsrichtung umschliesst und der Endabschnitt (8b) der Folie (8) beidseitig im Flanschteil (2) eingeschweisst ist, sodass das Ausgiessteil (3) zur Rückseite (2i) hin nur durch die Folie (8) versiegelt ist, und dass sich die Distanz (D1) zwischen Folie (8) und Befestigungsseite (2k) bei eingeschweisster Folie (8) zumindest im Bereich des Versiegelungsteil (2c) verringert.

9. Verfahren nach Anspruch 8, **dadurch gekennzeichnet, dass** der Endabschnitt (8b) an einer Stirnseite (8a) endet, und dass die Folie derart eingeschweisst wird, dass die Distanz (D1) zwischen der Befestigungsseite (2k) und der Stirnseite (8a) im Bereich bis zu 0,5 mm liegt, und insbesondere im Bereich zwischen 0,1 und 0,3 mm.

10. Verfahren nach einem der Ansprüche 8 bis 9, **dadurch gekennzeichnet, dass** mit Ultraschall geschweisst wird, um im Versiegelungsteil (2c) eine gasdichte Verbindung zwischen dem Endabschnitt (8b) der Folie (8) und dem Flanschteil (2) zu bewirken, und dass während des Ultraschallschweisses Material des Nasenteils (2f) in Richtung zur Eintrittsöffnung (3b) hin gedrängt wird, damit der Endabschnitt (8b) auf der der Rückseite (2i) abgewandten Seiten mit Material bedeckt wird und dabei das Versiegelungsteil (2c) ausgebildet wird, wobei das Versiegelungsteil (2c) vorzugsweise wulstförmig ausgebildet wird.

11. Verfahren nach einem der Ansprüche 8 bis 10, **dadurch gekennzeichnet, dass** die Rückseite (2i) mit einer in Richtung zum Nasenteil (2f) hin gekrümmt verlaufende Oberfläche ausgebildet wird.

12. Verbundpackung (6) umfassend einen Ausgiesser nach einem der Ansprüche 1 bis 7, wobei das Flanschteil (2) derart ausgestaltet ist, dass die mit der Befestigungsseite (2k) verschweisste Verbundpackung (6) und die an der Rückseite (2i) angeordnete Folie (8) sich in bezüglich des Flanschteils (2) radialer Richtung gegenseitig um eine Distanz (D2) von zumindest 1 mm, vorzugsweise um eine Distanz (D2) von bis zu 5 mm überlappen.

## Claims

1. A spout (1) comprising a spout part (3) having an inlet opening (3b), as well as having a spout opening (3a), as well as comprising a flange part (2) connected to the spout part (3), wherein the flange part (2) has two sides, an attachment side (2k) as well as a rear side (2i), wherein the attachment side (2k) is oriented towards the spout part (3) and is provided for the attachment at a laminated package (6), wherein a film (8) is arranged at the rear side (2i) of the flange part (2) and is welded to the rear side (2i) such that the spout part (3) is sealed towards the rear side (2a) only by the film (8), wherein the film (8) has an end section (8b), and wherein the flange part (2) has a weld (2a) extending in its circumferential direction, **characterized in that** the weld (2a) is configured such that the end section (8b) is welded at both sides in the flange part (2), that the film (8) is oxygen impermeable, and that the spacing between the end section (8b) and the attachment side (2k) of the flange part (2) reduces towards the periphery.

2. A spout in accordance with claim 1,
**characterized in that** the end section (8b) has an end face (8a), and **in that** the end section (8b), as well as the end face (8a) of the film (8) are welded to the flange part (2) in gas-tight manner.

3. A spout in accordance with one of claim 1 or claim 2,
**characterized in that** the weld (2a), in which the end section (8b) is welded in from both sides, extending in the circumferential direction is configured as a bead-like sealed part (2c).

4. A spout in accordance with any one of the preceding claims,
**characterized in that** the end section (8b) and the attachment side (2k) are arranged one above the other.

5. A spout in accordance with one of the preceding claims,
**characterized in that** the end section (8b) extends tilted or curved with respect to the attachment side (2k).

6. A spout in accordance with one of the preceding claims,
**characterized in that** the end section (8b) ends at the end face (8a), and **in that** the spacing (D1) between the attachment side (2k) and the end face (8a) lies in the range of up to 0.5 mm.

7. A spout in accordance with claim 6, **characterized in that** the spacing (D1) lies in the range between up to 0.1 and 0.3 mm.

8. A method of manufacturing a spout (1), comprising a spout part (3) having an inlet opening (3b), as well as having a spout opening (3a), as well as comprising a flange part (2) connected to the spout part (3), wherein the flange part (2) has two sides, an attachment side (2k) as well as a rear side (2i), wherein the attachment side (2k) is oriented towards the spout part (3), **characterized in that** the flange part (2) is generated with a nose part (2f) arranged at the rear side (2i), said nose part extending in the circumferential direction and projecting over the rear side (2i), said flange part (2) having a thickness reducing towards the nose part (2f), that a film (8), which also covers the inlet opening (3b), is arranged in a region of the rear side (2i) enclosed by the nose part (2f), wherein the film (8) has an end section (8b) directed towards the nose part (2f) and wherein the nose part (2f) is transformed to a sealed part (2c) such that the sealed part (2c) encloses the end section (8b) in the circumferential direction and the end section (8b) of the film (8) is welded at both sides in the flange part (2), such that the spout part (3) is sealed towards the rear side (2i) only by the film (8), and that the spacing (D1) between the film (8) and the attachment side (2k) for a welded film (8) reduces at least in the region of the sealed part (2c).

9. A method according to claim 8, **characterized in that** the end section (8b) ends at an end face (8a), and that the film is welded such, that the spacing (D1) between the attachment side (2k) and the end face (8a) lies in the range of up to 0.5 mm, and preferably in the range of between 0.1 and 0.3 mm.

10. A method in accordance with one of claims 8 to 9, **characterized in that** the welding is carried out with ultrasound, in order to bring about a gas-tight connection in the sealed part (2c) between the end section (8b) of the film (8) and the flange part (2) and that material of the nose part (2f) is urged in the direction towards the inlet opening (3b) during the ultrasonic welding, such that the end section (8b) is covered with material at the side remote from the rear side (2i) and in this connection, the sealed part (2c) is formed, wherein the sealed part (2c) is preferably configured bead-shaped.

11. A method in accordance with any one of claims 8 to 10, **characterized in that** the rear side (2i) is formed with a surface extending curved in a direction towards the nose part (2f).

12. Laminated package (6) comprising a spout in accordance with one of claims 1 to 7, wherein the flange part (2) is configured such that the laminated package (6) welded with the attachment side (2k) and the film (8) arranged on the back side (2i) overlap in radial direction with respect to the flange part (2) over a distance (D2) of at least 1 mm, and preferably over a distance (D2) of up to 5 mm.

## Revendications

1. Verseur (1) comprenant une partie de versage (3) avec une ouverture d'entrée (3b) ainsi qu'une ouverture de versage (3a) et comprenant une partie de bride (2) raccordée à la partie de versage (3), la partie de bride (2) présentant deux côtés, un côté de fixation (2k) ainsi qu'un côté arrière (2i), le côté de fixation (2k) étant orienté vers la partie de versage (3) et étant prévu pour la fixation à un emballage composite (6), une feuille (8) étant disposée contre le côté arrière (2i) de la partie de bride (2) et étant soudée au côté arrière (2i) de telle sorte que la partie de versage (3) soit scellée seulement par la feuille (8) vers le côté arrière (2i), la feuille (8) présentant une portion d'extrémité (8b) et la partie de bride (2) présentant un soudage (2a) s'étendant dans sa direction périphérique, **caractérisé en ce que** le soudage (2a) est configuré de telle sorte que la portion d'extrémité (8b) soit soudée des deux côtés dans la partie de bride (2), **en ce que** la feuille (8) est imperméable à l'oxygène, et **en ce que** la distance entre la portion d'extrémité (8b) et le côté de fixation (2k) diminue dans la direction de la périphérie de la partie de bride (2).

2. Verseur selon la revendication 1, **caractérisé en ce que** la portion d'extrémité (8b) présente un côté frontal (8a), et **en ce que** la portion d'extrémité (8b) ainsi que le côté frontal (8a) de la feuille (8) sont soudés de manière étanche au gaz dans la partie de bride (2).

3. Verseur selon l'une quelconque des revendications 1 ou 2, **caractérisé en ce que** le soudage (2a) s'étendant dans la direction périphérique, dans lequel la portion d'extrémité (8b) est soudée des deux côtés, est configuré sous forme de partie de scellement en forme de bourrelet (2c).

4. Verseur selon l'une quelconque des revendications précédentes, **caractérisé en ce que** la portion d'extrémité (8b) et le côté de fixation (2k) sont disposés l'un au-dessus de l'autre.

5. Verseur selon l'une quelconque des revendications précédentes, **caractérisé en ce que** la portion d'extrémité (8b) s'étend sous forme inclinée ou courbée par rapport au côté de fixation (2k).

6. Verseur selon l'une quelconque des revendications précédentes, **caractérisé en ce que** la portion d'extrémité (8b) se termine au niveau du côté frontal (8a) et **en ce que** la distance (D1) entre le côté de fixation (2k) et le côté frontal (8a) est comprise dans une plage allant jusqu'à 0,5 mm.

7. Verseur selon la revendication 6, **caractérisé en ce que** la distance (D1) est comprise dans une plage de 0,1 à 0,3 mm.

8. Procédé de fabrication d'un verseur (1), comprenant une partie de versage (3) avec une ouverture d'entrée (3b) ainsi qu'une ouverture de versage (3a) et comprenant une partie de bride (2) raccordée à la partie de versage (3), la partie de bride (2) présentant deux côtés, un côté de fixation (2k) ainsi qu'un côté arrière (2i), le côté de fixation (2k) étant orienté vers la partie de versage (3), **caractérisé en ce que** la partie de bride (2) est réalisée avec une partie d'ergot (2f) s'étendant sur la périphérie du côté arrière (2i) dans la direction périphérique, faisant saillie au-dessus du côté arrière (2i) et avec une épaisseur diminuant vers la partie d'ergot (2f), **en ce qu'**une feuille (8) qui recouvre également l'ouverture d'entrée (3b) est disposée dans une région du côté arrière (2i) entourée par la partie d'ergot (2f), **en ce que** la feuille (8) présente une portion d'extrémité (8b) vers la partie d'ergot (2f) et **en ce que** la partie d'ergot (2f) est façonnée pour former une partie de scellement (2c) de telle sorte que la partie de scellement (2c) entoure la portion d'extrémité (8b) dans la direction périphérique et que la portion d'extrémité (8b) de la feuille (8) soit soudée des deux côtés dans la partie de bride (2) de telle sorte que la partie de versage (3) ne soit scellée par la feuille (8) que vers le côté arrière (2i), et que la distance (D1) entre la feuille (8) et le côté de fixation (2k) diminue au moins dans la région de la partie de scellement (2c) lorsque la feuille (8) est soudée.

9. Procédé selon la revendication 8, **caractérisé en ce que** la portion d'extrémité (8b) se termine au niveau d'un côté frontal (8a) et **en ce que** la feuille est soudée de telle sorte que la distance (D1) entre le côté de fixation (2k) et le côté frontal (8a) soit comprise dans une plage allant jusqu'à 0,5 mm, et en particulier soit comprise dans une plage de 0,1 à 0,3 mm.

10. Procédé selon l'une quelconque des revendications 8 à 9, **caractérisé en ce que** le soudage est effectué par ultrasons afin de réaliser une liaison étanche au gaz dans la partie de scellement (2c) entre la portion d'extrémité (8b) de la feuille (8) et la partie de bride (2), et **en ce que** pendant le soudage par ultrasons, le matériau de la partie d'ergot (2f) est repoussé dans la direction de l'ouverture d'entrée (3b) afin que la portion d'extrémité (8b) soit recouverte de matériau sur les côtés opposés au côté arrière (2i) en créant ainsi la partie de scellement (2c), la partie de scellement (2c) étant réalisée de préférence en forme de bourrelet.

11. Procédé selon l'une quelconque des revendications 8 à 10, **caractérisé en ce que** le côté arrière (2i) est réalisé avec une surface s'étendant sous forme courbe dans la direction de la partie d'ergot (2f).

12. Emballage composite (6) comprenant un verseur selon l'une quelconque des revendications 1 à 7, la partie de bride (2) étant configurée de telle sorte que l'emballage composite (6) soudé avec le côté de fixation (2k) et la feuille (8) disposée sur le côté arrière (2i) se chevauchent mutuellement dans la direction radiale par rapport à la partie de bride (2) sur une distance (D2) d'au moins 1 mm, de préférence sur une distance (D2) allant jusqu'à 5 mm.
